# EUROPEAN PATENT APPLICATION

(11) **EP 2 123 818 A1**
(43) Date of publication of application: **25.11.2009**
(21) Application number: 07832614.7
(22) Date of filing: 28.11.2007
(51) Int. Cl.: D06F 37/40, D06F 23/02, D06F 23/06, H02K 5/00, H02K 5/24, H02K 7/14, H02K 21/14, H02K 21/22

(54) **DRUM TYPE WASHING MACHINE**

(30) Priority: 14.02.2007 JP 2007033092
(71) Applicant: Panasonic Corporation, Kadoma-shi Osaka 571-8501 (JP)
(72) Inventor: HIWAKI, Hideharu, Chuo-ku, Osaka-shi, Osaka 540-6027 (JP); MATSUO, Shigeru, Chuo-ku, Osaka-shi, Osaka 540-6027 (JP)
(74) Representative: Schwabe - Sandmair - Marx
(86) International application number: PCT/JP2007/072892
(87) International publication number: WO 2008/099550

(57) **Abstract**

The structure includes a rotary drum accommodating laundries, a washing tub incorporating the rotary drum, a motor for driving the rotary drum mounted on the backside of the washing tub, and a rotation shaft for transmitting the rotation of the motor to the rotary drum. The motor is molded with a resin material, and includes a stator and a roter. The stator is mounted on the backside of the washing tub at a plurality of positions by a plurality of mounting devices formed integrally with the molded resin. The mounting devices extend outwardly from the outer circumference. The rotor is connected to a rotation shaft and is rotatably supported on the backside of the washing tub. When the number of teeth extended radially from the stator is set to be 6N (N being a natural number), and the number of mounting devices to be M, 2N and M are prime. The number of poles of the motor is 10N.

## Description

### TECHNICAL FIELD

The present invention relates to a drum type washing machine for washing laundries contained in a rotary drum by rotatablly driving the rotary drum by a motor. The rotary drum of a cylindrical shape having a bottom is installed in a washing tub so that the direction of rotation shaft is set to be horizontal or inclined downward from the horizontal direction, from the opened front side to the backside at the bottom.

### BACKGROUND ART

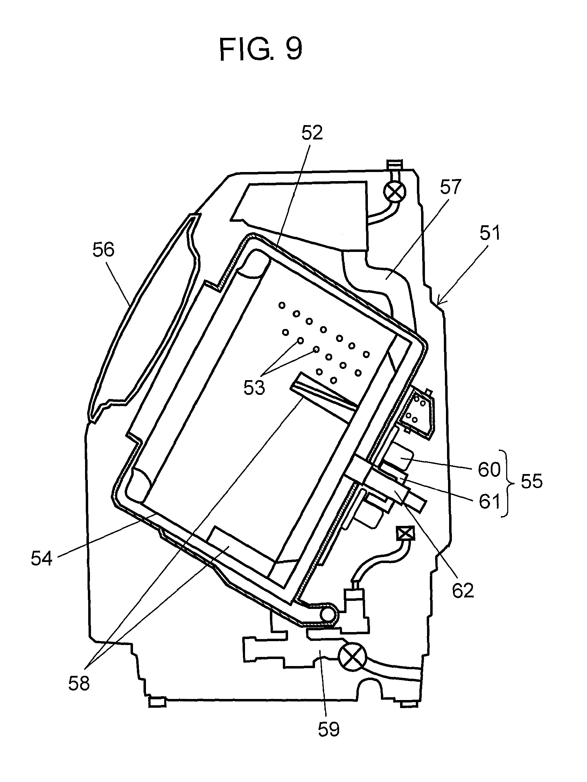

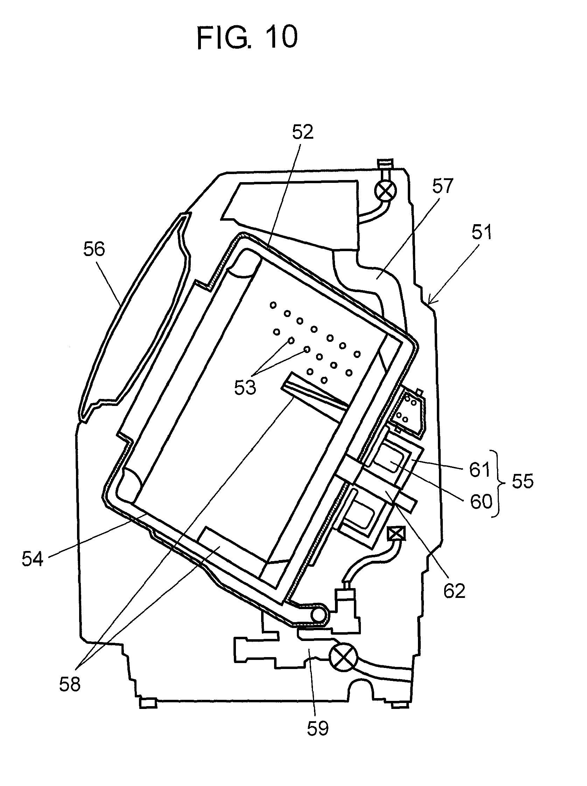

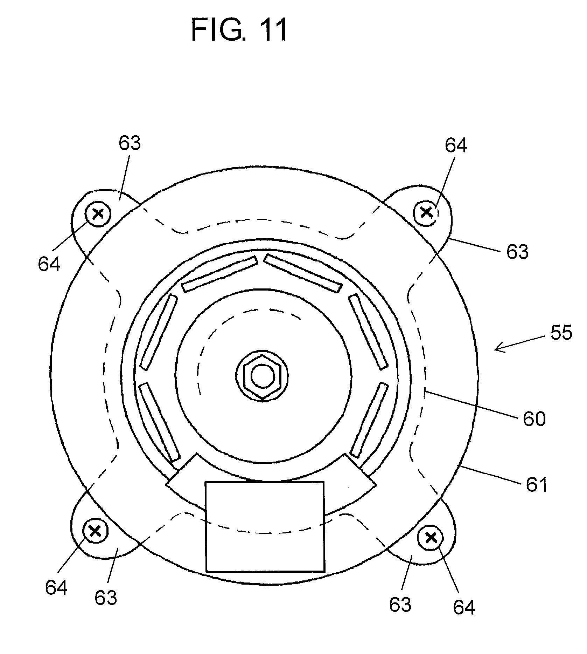

FIG. 9 is a sectional view showing the structure of a conventional drum type washing machine using a motor of inner rotor type, FIG. 10 is a sectional view showing the structure of the drum type washing machine using a motor of outer rotor type, and FIG. 11 is a backside view of the motor of the drum type washing machine using the motor of outer rotor type.

In such drum type washing machine, as shown in FIG. 9 and FIG. 10, rotary drum 54 having a plurality of holes 53 is disposed in washing tub 52 elastically supported by suspension structure in washing machine main body 51. Rotary drum 54 is rotationally driven by motor 55, and by opening door 56 provided at the front side of washing machine main body 51, laundries can be put into or taken out of rotary drum 54 through the front opening of washing tub 52 and the front opening of rotary drum 54.

After opening door 56, putting laundries into rotary drum 54 and supplying a detergent, when the operation is started, water is supplied into washing tub 52 from water supply system 57, and the supplied water is also supplied into rotary drum 54 by a specified amount through holes 53. When rotary drum 54 is driven by motor 55 to rotate at a specified speed, the laundries contained in rotary drum 54 are hooked by agitating protrusion 58 provided on the inner circumference of rotary drum 54, and lifted in the rotating direction, and dropped from a proper height, and the laundries are washed by additional beating action.

After this washing step, the dirty washing water is discharged by drain system 59, and water is newly supplied, and a rinsing step begins, and after the rinsing step, rotary drum 54 is rotated at high speed to start a dewatering step. These steps are executed automatically according to a specified control procedure.

Conventionally, a first motor capable of rotating normally and reversely was used for executing the washing step and the rinsing step by rotating the rotary drum normally and reversely at a first rotating speed, and a second motor was used for rotating the rotary drum continuously in one direction for executing the dewatering step at a second rotating speed. The two motors were mounted on the backside of the washing tub, and the rotation was transmitted to the rotary drum by way of a V-belt (for example, patent document 1). In other driving system, the rotation of the motor mounted on the backside of the washing tub was directly transmitted to the rotation shaft of the rotary drum (see, for example, patent document 2). Further, the motor mounted on the backside of the washing tub is a motor of inner rotor type in which the rotor is disposed on the inner circumference of the stator (see, for example, patent document 3), or a motor of outer rotor type in which the rotor is disposed on the outer circumference of the stator (see, for example, patent document 4), and thus the rotary drum was driven by various methods.

In either FIG. 9 or FIG. 10, motor 55 is composed of stator 60 attached to the outer bottom at the backside of washing tub 52, and rotor 61 attached to rotation shaft 62 of rotary drum 54.

The technology of installing stator 60 on the outer bottom of washing tub 52 is disclosed, for example, in patent document 3, and as shown in FIG. 11, stator 60 and rotor 61 are molded, and mounting bases 63 molded and formed in stator 60 are fixed by means of screws or bolts 64.

In such conventional method of installation, depending on the number of mounting bases 63, vibration or noise of washing tub 52 may be caused by vibrations due to electromagnetic force of stator 60.

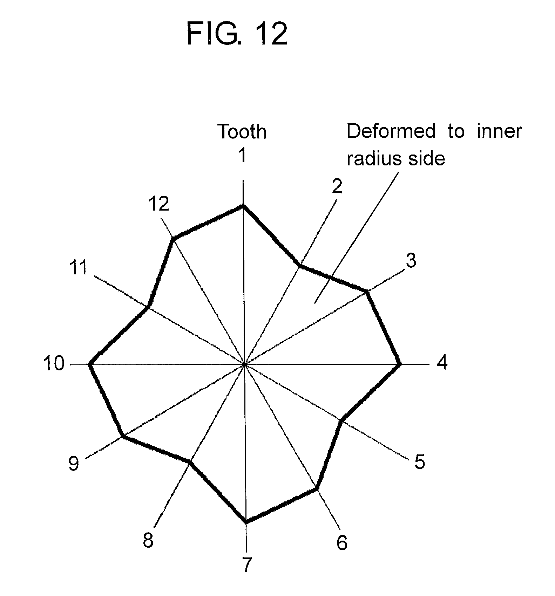

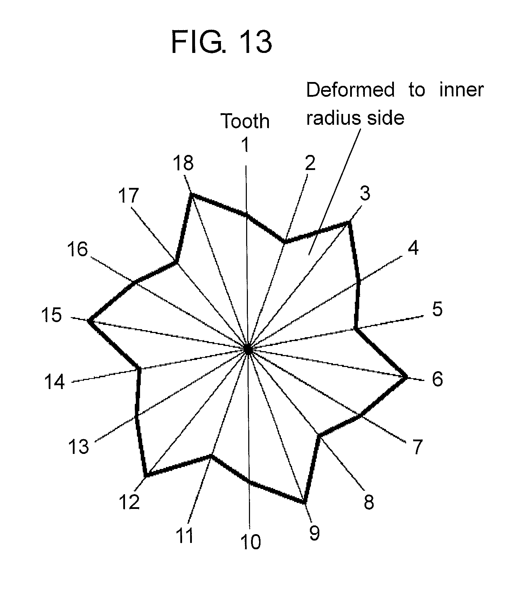

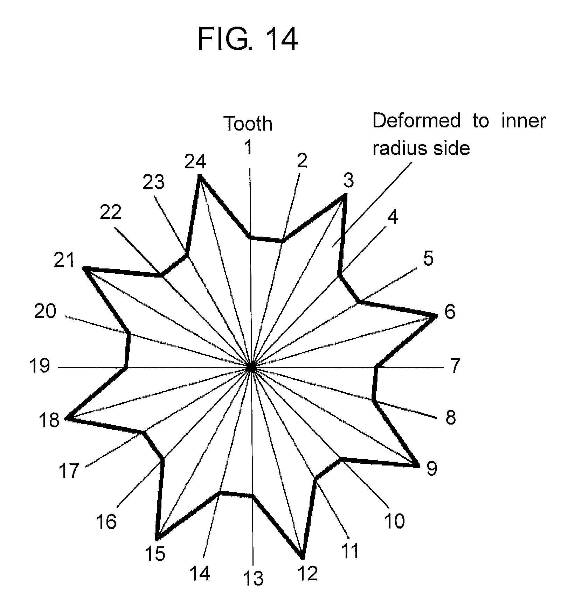

To solve such problem, the present inventor performed various tests and experiments, and found that stator 60 operating on three-phase alternating current is deformed to the inside in radial direction by vibrations due to electromagnetic force. The circumference distribution of deformation by electromagnetic force has a regularity corresponding to the arrangement position of teeth. And from the viewpoint of deformation to the inside in radial direction, the distribution is as shown in FIG. 12 when the number of teeth is 12, the distribution is as shown in FIG. 13 when the number of teeth is 18, and the distribution is as shown in FIG. 14 when the number of teeth is 24. FIG. 12 is an explanatory diagram showing a circumference distribution state of deformation to the inside in radial direction of the stator caused by electromagnetic force of a three-phase alternating-current stator having 12 teeth. FIG. 13 is an explanatory diagram showing a circumference distribution state of deformation to the inside in radial direction of the stator caused by electromagnetic force of a three-phase alternating-current stator having 18 teeth. FIG. 14 is an explanatory diagram showing a circumference distribution state of deformation to the inside in radial direction of the stator caused by electromagnetic force of a three-phase alternating-current stator having 24 teeth.

Accordingly, when mounting bases 63 are disposed at equal intervals in the circumferential direction as in the conventional method of installation, from the relation between the number of teeth and the number of mounting bases 63, it has been found that all positions of peaks of vibrations of stator 60, and all positions of mounting bases 63 coincide exactly, and that the mounting device transmits its vibrations to washing tub 52, thereby increasing the vibrations and noise.
Patent document 1: Japanese Patent Unexamined Publication No. H10-263271
Patent document 2: Japanese Patent Unexamined Publication No. 2006-43105
Patent document 3: Japanese Patent Unexamined Publication No. 2005-168116
Patent document 4: Japanese Patent Unexamined Publication No. 2004-216166

### DISCLOSURE OF THE INVENTION

The drum type washing machine of the present invention includes:
a rotary drum for accommodating laundries, the rotary drum being formed in a cylindrical shape with a bottom and installed so that a direction of a rotation axis is set in a horizontal direction or inclined downward from the horizontal direction, in terms of a line from an opened front side to a backside at the bottom;
a washing tub incorporating the rotary drum and being supported elastically in a washing machine main body;
a motor for driving the rotary drum mounted on a backside of the washing tub; and
a rotation shaft for transmitting rotation of the motor to the rotary drum.

The motor includes a stator and a roter and is molded with a resin material, and is mounted on the backside of the washing tub at a plurality of positions by a plurality of mounting devices, which is molded with the resin material integrally with the stator and formed extending outward from an outer circumference of the stator.

The rotor is rotatably supported on the backside of the washing tub and is attached to the rotation shaft.

Where, when the number of teeth extended radially from the stator is 6N (N being a natural number) and the number of mounting devices is M, both 2N and M are prime, and the number of poles of the motor is 10N.

In this drum type washing machine, the motor has its stator attached to the backside of the washing tub by a plurality of mounting devices disposed in its circumferential direction, and the rotor is rotated by the electromagnetic action by three-phase alternating current. The rotor is attached to the rotation shaft for transmitting the rotation to the rotary drum in the washing tub. As a result, the rotary drum is driven through the rotation shaft, thereby executing at least the washing step, rinsing step and dewatering step. Herein, if the number of teeth of the stator is 6N (N being a natural number), that is, a multiple of 6 usually expected to be excellent in rotating characteristic by three-phase alternating current, when the number of mounting devices is M, since 2N and M are both prime, the peak position of the vibration distribution in circumference direction occurring depending on the number of teeth, and the positions of the mounting devices do not coincide simultaneously. Accordingly, transmission of large vibrations to the washing tub can be suppressed, and further when the number of poles of the motor is 10N (N being a natural number), the winding of the stator of the motor becomes a distributed winding type, which shows no steep fluctuations of the electromagnetic force, so that the vibrations of the stator and the washing tub may be further suppressed.

### BRIEF DESCRIPTION OF THE DRAWINGS

FIG. 1 is a sectional view showing an essential structure of a drum type washing machine in a preferred embodiment of the present invention.
FIG. 2 is a backside view of the inside of the drum type washing machine.
FIG. 3 is a sectional view of nearly half of the motor mounting portion of the drum type washing machine.
FIG. 4 is a backside view of a motor used in the drum type washing machine.
FIG. 5 is a sectional view showing a mounting state of the motor of the drum type washing machine on the backside of a washing tub.
FIG. 6 is a perspective exploded view of stator and rotor of the motor of the drum type washing machine.
FIG. 7 is a perspective view as seen from the backside of the rotor in the motor of the drum type washing machine.
FIG. 8A is an explanatory diagram of a step in normal and reverse continuous rotation driving mode of the drum type washing machine.
FIG. 8B is an explanatory diagram of a step in normal and reverse continuous rotation driving mode of the drum type washing machine.
FIG. 8C is an explanatory diagram of a step in normal and reverse continuous rotation driving mode of the drum type washing machine.
FIG. 8D is an explanatory diagram of a step in normal and reverse continuous rotation driving mode of the drum type washing machine.
FIG. 8E is an explanatory diagram of a step in normal and reverse continuous rotation driving mode of the drum type washing machine.
FIG. 8F is an explanatory diagram of a step in normal and reverse continuous rotation driving mode of the drum type washing machine.
FIG. 8G is a behavior explanatory diagram of laundries in normal and reverse continuous rotation driving mode of the drum type washing machine.
FIG. 9 is a sectional view of a conventional drum type washing machine using a motor of inner rotor type.
FIG. 10 is a sectional view of a conventional drum type washing machine using a motor of outer rotor type.
FIG. 11 is a backside view of a motor of the conventional drum type washing machine using a motor of outer rotor type.
FIG. 12 is an explanatory diagram showing circumference distribution state seeing the deformation to the inside in radial direction of a stator caused by electromagnetic force in the case of 12 teeth of a three-phase alternating-current stator.
FIG. 13 is an explanatory diagram showing circumference distribution state seeing the deformation to the inside in radial direction of a stator caused by electromagnetic force in the case of 18 teeth of the same.
FIG. 14 is an explanatory diagram showing circumference distribution state seeing the deformation to the inside in radial direction of a stator caused by electromagnetic force in the case of 24 teeth of the same.

### REFERENCE MARKS IN THE DRAWINGS

- 1: Washing machine main body
- 2: Washing tub
- 3: Hole
- 4: Rotary drum
- 4a: Rotation shaft
- 5: Motor

- 5a: Stator
- 5b: Rotor
- 5c: Inner rotor
- 5d: Outer rotor
- 6: Door
- 7: Water supply system
- 9: Control board
- 11: Drain system
- 13: Drying system
- 20: Core
- 20a: Teeth
- 22: Magnet
- 23: Core
- 24: Bearing
- 30: Mounting device
- 31, 37: Resin mold portion
- 32: Mounting base
- 33: Stator mounting seat body
- 34: Bolt
- 124: Winding

### DETAILED DESCRIPTION THE INVENTION

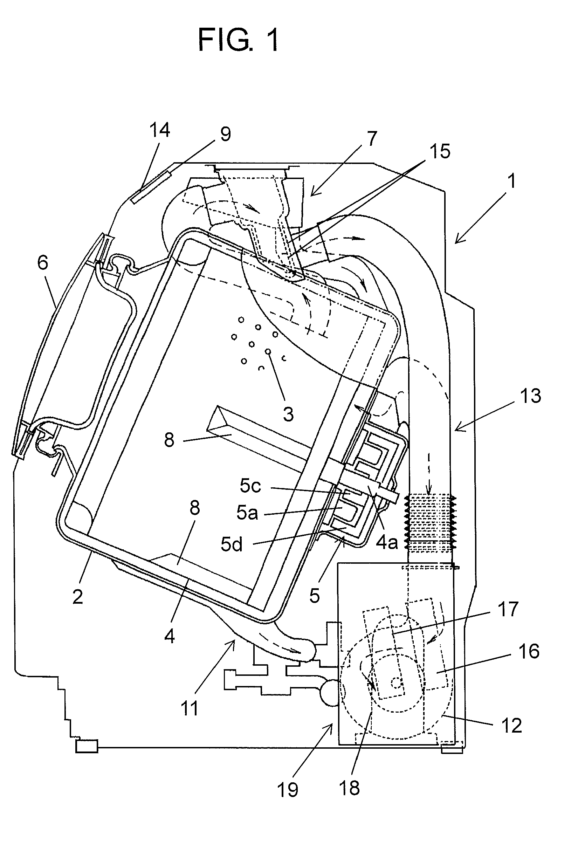

A drum type washing machine in an exemplary embodiment of the present invention is described below while referring to FIG. 1 to FIG. 8 for better understanding of the present invention. The following description shows exemplary embodiments of the present invention, and is not intended to limit the contents of the scope of the claims thereof.

### (Exemplary Embodiments)

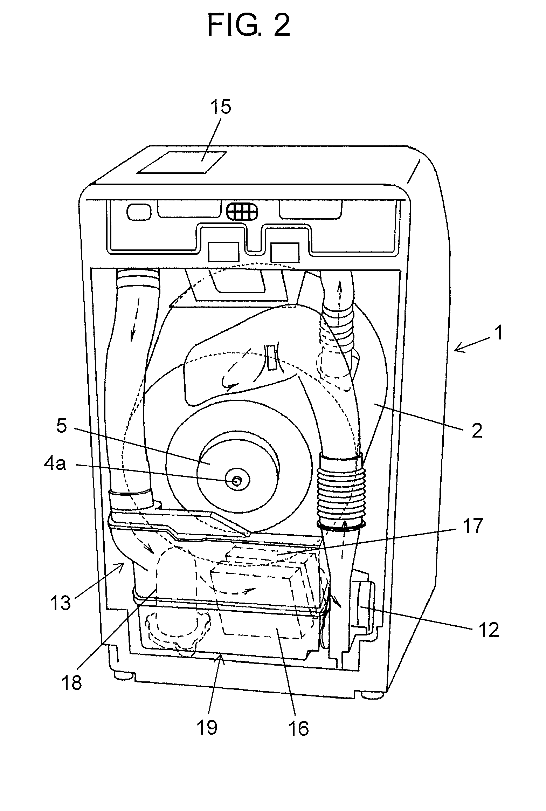

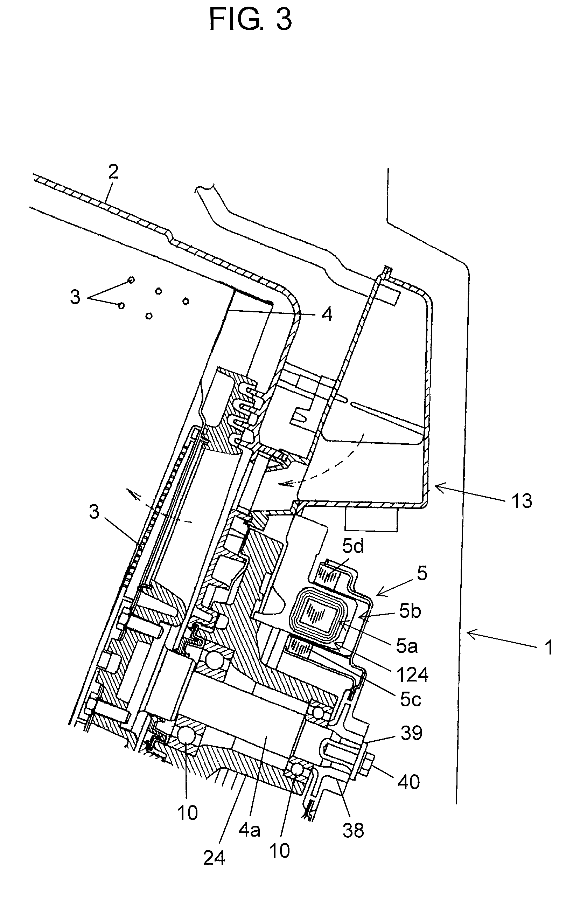

FIG. 1 is a sectional view showing an essential structure of a drum type washing machine in a exemplary embodiment of the present invention, FIG. 2 is a backside view of the inside of the drum type washing machine, and FIG. 3 is a sectional view of nearly half of the motor mounting portion of the drum type washing machine.

The drum type washing machine in the exemplary embodiment of the present invention has the basic configuration as described above, and as shown in FIG. 1, rotary drum 4 having a plurality of holes 3 is disposed in washing tub 2 elastically supported by suspension structure in washing machine main body 1. Rotary drum 4 is rotatably driven by motor 5, and by opening door 6 provided at the front side of washing machine main body 1, laundries can be put into or taken out of rotary drum 4 through the front openings of washing tub 2 and the front opening of rotary drum 4.

After opening door 6, and putting laundries into rotary drum 4 and supplying a detergent, when the operation is started, water is supplied into washing tub 2 from water supply system 7, and the supplied water is also supplied into rotary drum 4 by a predetermined amount through holes 3. When rotary drum 4 is driven by motor 5 to rotate at a predetermined speed of about 40 rpm, for example, the laundries contained in rotary drum 4 are hooked by agitating protrusion 8 provided on the inner circumference of rotary drum 4, and lifted in the rotating direction, and dropped from a proper height, and the laundries are washed along with beating action.

After this washing step, the dirty washing water is discharged by drain system 11, and water is newly supplied, and a rinsing step begins. After the rinsing step, rotary drum 4 is rotated at high speed, at about 1,000 rpm for example, to start a dewatering step. These steps are executed automatically according to a predetermined control procedure.

The drum type washing machine in the exemplary embodiment of the present invention sucks air in washing tub 2 and rotary drum 4 by means of blower 12. The drum type washing machine is a so-called drum type washing and drying machine provided with drying system 13. The drying system repeats the dehumidifying and heating steps sequentially, and blows dry and hot air repeatedly into washing tub 2 and rotary drum 4, and the dewatering step is automatically followed by the drying step.

The drum type washing machine in the exemplary embodiment of the present invention thus operates automatically according to the mode setting and control program from operation panel 14. The washing machine is equipped with control devices such as control board 9 mounting a microcomputer and the like, and the control devices automatically control motor 5, water supply system 7, drain system 11, and drying system 13, and the washing step, the rinsing step, and the drying step are executed.

Water supply system 7 appropriately supplies water as indicated by solid-line arrow by opening or closing of an electromagnetic valve, and by using the supplied water, the detergent in the detergent compartment can be appropriately supplied into washing tub 2. Drain system 11 discharges water by opening and closing of the electromagnetic valve, as indicated by single-dot chain line arrow, whenever required at the end of the washing step or at the end of the rinsing step.

Drying system 13 is installed in a circulation route for circulating the air in washing tub 2 and rotary drum 4 by blower 12 as indicated by broken line arrow in FIG. 1 and FIG. 2, and is provided with lint filter 15 for capturing and removing lint from the air introduced from washing tub 2 and rotary drum 4, dehumidifier 16 for dehumidifying the introduced air after filtering, and heater 17 for heating the dehumidified air to obtain a dry and hot air. Blower 12 is installed at the downstream side of heater 17 so as to be free from effects of humidity. Dehumidifier 16 and heater 17 shown in FIG. 1 are an evaporator and a condenser for exchanging heat with the circulating air, while the refrigerant is circulated by compressor 18, and heat pump cycle 19 is constituted. However, the construction is not limited to this structure alone.

Rotation shaft 4a of rotary drum 4 is directly coupled with motor 5 mounted on the backside of washing tub 2,, and rotary drum 4 is installed, together with washing tub 2, at a inclination of the rotation shaft direction from the opening side to the bottom side at angle θ of 20±10 degrees from the horizontal direction. Therefore, as compared with rotary drum 4 installed in the horizontal direction, even if rotary drum 4 is installed at a same height, the opening is obliquely upward, so that the laundries can be put in or taken out in a natural posture for the user without stooping.

According to the experience of the inventors, an appropriate inclination angle θ is 20±10 degrees so that the laundries can be put in or taken out easily in a natural position for the user without stooping by anyone from children (excluding infants) to adults regardless to their height, whether seated in wheelchair or not. Another merit is that a deep water pool is collected at the backside of rotary drum 4, even if the amount of water is small.

In the example shown in FIG. 1, rotation shaft 4a is directly coupled to the backside of rotary drum 4, and the rotation of motor 5 is transmitted, but the construction is not limited to this structure alone.

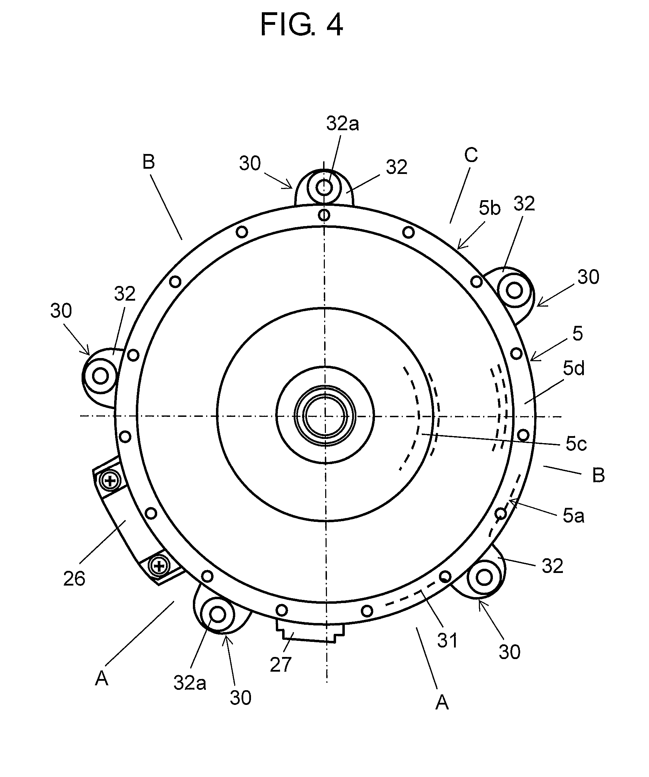

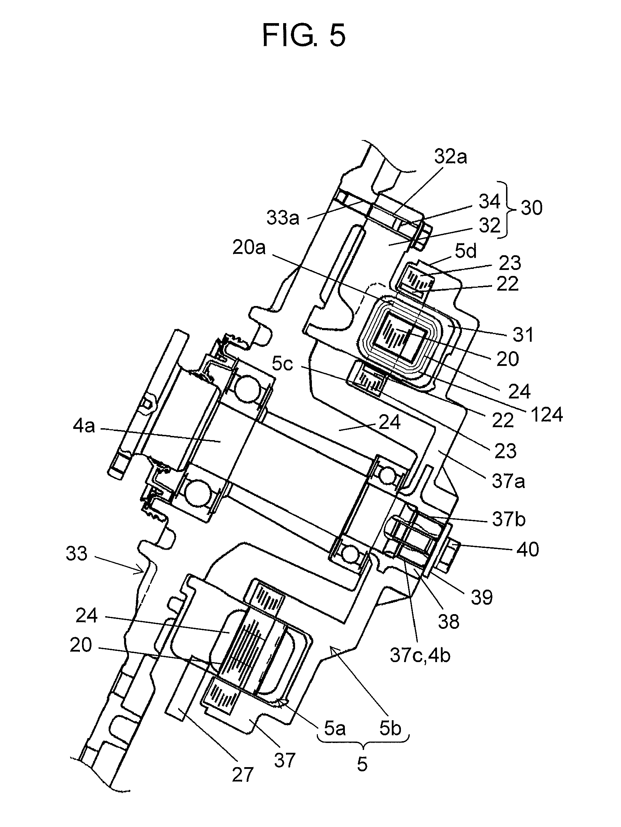

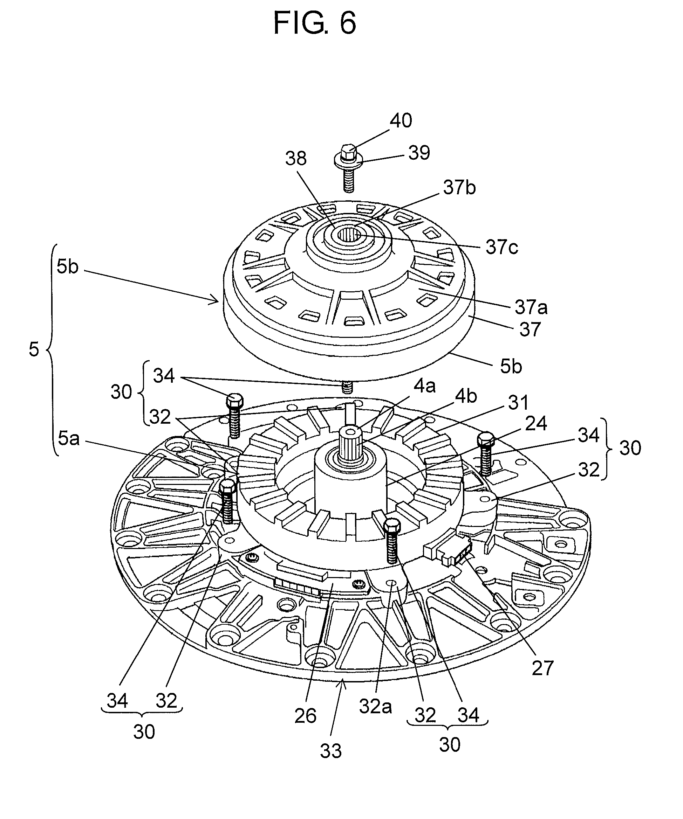

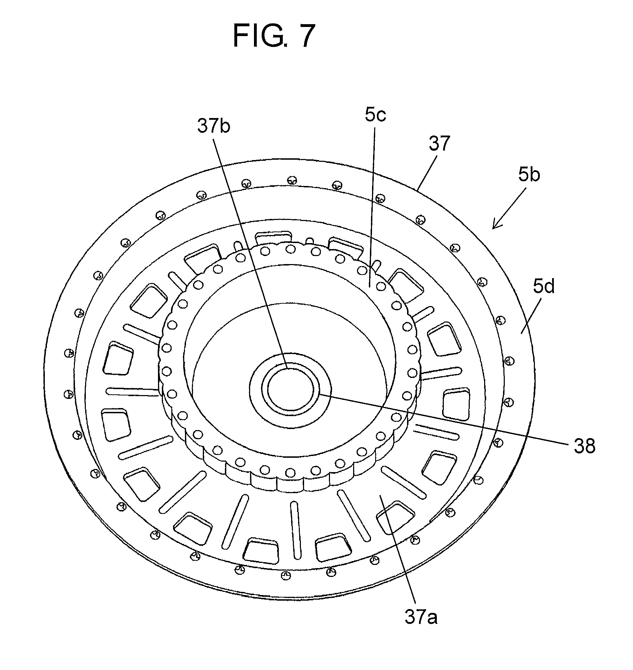

The relation of the number of teeth of the motor, the number of mounting devices, and the number of poles is explained. FIG. 4 is a backside view of the motor used in the drum type washing machine in the exemplary embodiment of the present invention, FIG. 5 is a sectional view showing a mounting state of the motor of the drum type washing machine on the backside of the washing tub, FIG. 6 is a perspective exploded view of the stator and the rotor of the motor of the drum type washing machine, and FIG. 7 is a perspective view as seen from the backside of the rotor in the motor of the drum type washing machine.

Motor 5 in the exemplary embodiment of the present invention includes, as shown in FIG. 4 to FIG. 7, stator 5a mounted on the backside of washing tub 2 at a plurality of positions by a plurality of mounting devices 30 disposed in the circumference direction, and rotor 5b rotatably supported on the backside of washing tub 2 and connected to rotation shaft 4a. The number of teeth 20a of motor 5 extended radially from core 20 of stator 5a is 6N (N being a natural number), the number of mounting devices 30 disposed in the circumference direction of stator 5a is M. As a result, motor 5 is mounted on the backside of washing tub 2 by means of M pieces of mounting devices 30.

By an electromagnetic action of three-phase alternating-current power between stator 5a and rotor 5b mounted on rotation shaft 4a for transmitting the rotation to rotary drum 4 in washing tub 2, rotor 5b is put into rotation. Consequently, rotary drum 4 is driven through rotation shaft 4a, thereby executing the washing step, the rinsing step, the dewatering step, and the drying step. In particular, the number of teeth of stator 5a is set to be 6N (N being a natural number), that is, a multiple of 6 usually known to be favorable in rotating characteristic by the three-phase alternating-current power. Motor 5 is a three-phase alternating-current motor, and therefore one set is formed of 3 teeth, and 2N obtained by dividing 6N by 3, is the number of sets of deformation to the inside in the radial direction by electromagnetic force. And 2N and M as the number of mounting deices 30 are set to be prime. For example, when 6N is 6, 12, 18, etc., 2N is 2, 4, 6, etc., and then M is set to be 5, 7, 11, etc. As a result, peak positions of vibration distribution in the peripheral direction occurring depending on the number of teeth 20a, or 12, 18, 24, as shown in FIG. 10 to FIG. 12, can be deviated so as not to coincide simultaneously with the positions of five mounting devices 30 shown, for example, in FIG. 4, FIG. 6, and thereby transmission of large vibrations to washing tub 2 can be suppressed.

As a result, the number of teeth of stator 5a of motor 5 for executing the steps of the washing machine by driving rotary drum 4 in washing tub 2 can be set to be a multiple of 6 that is usually excellent in rotating characteristic. Moreover, since the relation of number M of mounting devices 30 and 2N is in a prime relation, peak positions of vibration distribution in the circumference direction occurring depending on the number of teeth 20a do not coincide simultaneously with the positions of each mounting devices 30, and thereby transmission of large vibrations to washing tub 2 can be suppressed. Hence, vibrations and noise generated from the drum type washing machine can be decreased.

At the same time, by setting the number of poles of motor 5 to 10N (N being a natural number) (for example, 10, 20, 30, etc.), it is possible to use a distribution winding type, in which fluctuations are not steep in electromagnetic force, for winding 124 in stator 5a of motor 5, and vibrations of stator 5a and washing tub 2 may be further suppressed. At this time, the ratio of number of poles and number of teeth is preferred to be set at 10:6, 20:12, 30:18, etc.

That is, in order to rotate motor 5 appropriately, the number of poles should be a multiple of 2, and the number of teeth should be a multiple of 3. In winding 124 of distribution winding type, the ratio of number of poles and number of teeth must be set at 2N:6N or 10N:6N. In the washing machine, since a high torque is required, it is advantageous to increase the number of poles. Accordingly, the ratio of number of poles and number of teeth of motor 5 is selected to be 10N:6N.

Further, rotor 5b of the exemplary embodiment of the present invention includes inner rotor 5c and outer rotor 5d having magnet 22 shown in FIG. 5 and corresponding core 23 shown in FIG. 5, disposed at the outside and inside of stator 5a as shown in FIG. 1, FIG. 5.

Hence, one stator 5a allows to eliminate the electromagnetic action between stator 5a and inner rotor 5c, and stator 5a and outer rotor 5d both rotors having inner and outer circumference cores 23. Without disturbing transmission of vibrations or decrease of generation of noise, the motor torque can be increased by making use of the dead space between the inner circumference of stator 5a and bearing unit 24 of rotation shaft 4a.

At this time, as shown in FIG. 3, FIG. 5, when a toroidal winding wound in the axial direction is used for winding 124, in spite of the distributed winding type, the circumference length of winding 124 an be shortened, which contributes to reduction of size and enhancement of efficiency.

The interval between mounting devices 30 disposed in the circumference direction may be set freely from one to a number of mounting devices 30. As a result, the positions of mounting devices 30 are prevented from coinciding simultaneously with the peaks of vibrations occurring due to repeated distributions of nearly same intervals in the peripheral direction corresponding to teeth 20a at equal intervals in the peripheral direction, and resonance can be prevented easily. Therefore, transmission of vibrations and generation of noise may be further suppressed.

For example, mounting devices 30 may be disposed at intervals in three different kinds A, B, C as shown in FIG. 4, blowing of high temperature air into washing tub 2 in drying system 13, mounting of rotation position detector 26, mounting of power source connector 27, and connection with power source by power source connector 27 may be adjusted with the peripheral conditions, and appropriate circumference directional arrangement is realized.

More specifically, mounting devices 30 are composed of tightening devices, as shown in FIG. 5, FIG. 6, such as mounting bases 32, and bolts 34 for screwing and tightening mounting bases 32 to metal stator mounting seat bodies 33 attached to the backside of washing tub 2. Herein, mounting bases 32 are formed by extending outward to the outer circumference of the end face in the axial direction of resin mold portion 31 having stator 5a molded of resin material. Further mounting bases 32 are protruded to the mounting side to washing tub 2.

Accordingly, each mounting base 32 is provided with mounting holes 32a as shown in FIG. 4 to FIG. 6. As shown in FIG. 5, in this mounting hole 32a, bolt 34 is passed from the opposite side of washing tub 2, and stator 5a is securely connected to stator mounting seat body 33 by matching with screw hole 33a of stator mounting seat body 33. The stator mounting seat body 33 is attached to the backside of washing tub 2 by bolting. Thus, stator 5a is securely attached to the backside of washing tub 2.

Rotor 5b also has resin molded portion 37 molded by resin material as shown in FIG. 5 to FIG. 7. In the central part of ceiling 37a covered at the opposite side of washing tub 2 of stator 5a in this resin molded portion 37, mounting hole 37b is formed by insert forming metal boss 38. This mounting hole 37b is engaged with rotation shaft 4a at a rear end of rotation shaft 4a, where is an opposite side of washing tub 2. The rotation shaft 4a is supported by bearing unit 24, and rotor 5b and rotation shaft 4a can be fitted tightly without being loosened by fitting serrations of rotor 5b and rotation shaft 4a, or by fitting key and key groove. By using tightening devices such as bolt 40 with holding washer 39, rotor 5b is tightened to rotation shaft 4a, and they can be combined firmly. However, the mounting and assembling procedure of motor 5 on washing machine main body 1 is not particularly specified, but may be selected properly from various methods.

The specific construction and structure of mounting devices 30, and the positioning device in rotating direction of stator 5a and rotor 5b may be replaced by various already known methods.

In rotary drum 4 inclined from the horizontal direction and installed, the laundries are more likely to be collected at lower position also in the direction of rotation shaft as compared with the case installed in a horizontal direction. Accordingly, in the drum type washing machine in the exemplary embodiment of the present invention, entangling and twisting of laundries in rotary drum 4 are substantially improved, and it is intended to eliminate creasing while enhancing the mechanical force at the same time. That is, concerning the driving control by control board 9 on rotary drum 4, the operation includes a normal and reverse pivot rotation drive mode and a normal and reverse continuous rotation drive mode. In the normal and reverse pivot rotation drive mode, rotary drum 4 is controlled for alternately repeating quick normal pivot rotation and quick reverse pivot rotation from more than 90 degrees to less than 180 degrees. And in the normal and reverse continuous rotation drive mode, repeating normal and reverse rotation alternately and continuously at a rotating speed where the laundries lifted by rotation of rotary drum 4 drops from a height when the own weight exceeds the centrifugal force. Therefore, these drive modes can be executed as desired freely.

In particular, by the pivot rotation of rotary drum 4 exceeding 90 degrees and less than 180 degrees, the laundries are lifted to less than 180 degrees by exceeding the maximum limit of 90 degrees. By executing such pivot rotation drive alternately in normal and reverse direction, at the final point or close to the point of lifting the laundries, deceleration or braking for inverting the rotation is caused, and by the forced peeling force by rotation inertia given to the laundries, or by the own weight, the laundries can be peeled off securely or instantly from the inner side of rotary drum 4. Further, by this normal and reverse alternate pivot rotation drive, the lifting position and dropping position of laundries can be alternated right and left by every time of pivot rotation drive, the effect of eliminating entangling, twisting and creasing of laundries can be enhanced, and a mechanical force can be applied.

In the normal and reverse pivot rotation drive mode alone, entangling, twisting and creasing of laundries can be lessened, but it is hard to exchange the upper and lower positions of the laundries, and uneven washing is likely to occur. However, when combined with normal and reverse continuous rotation drive mode, the upper and lower positions of the laundries can be exchanged easily. That is, by executing the both drive modes, entangling, twisting and creasing of laundries in the normal and reverse continuous rotation drive mode can be lessened, and uneven application of mechanical force to the laundries in the normal and reverse pivot rotation drive mode can be lessened. More specifically by the normal and reverse pivot rotation drive mode, entangling, twisting and creasing of laundries can be decreased, and a strong hand-shaking motion is continuously applied to the laundries by the normal and reverse continuous rotation drive mode, and the laundries can be moved largely and continuously, and uniform washing effects are given by lessening the uneven effect.

In the normal and reverse pivot rotation drive mode, quick normal rotation and quick reverse rotation are repeated alternately, a large driving load is applied to motor 5, but when combined with the normal and reverse continuous rotation drive mode of smaller drive load applied to motor 5, the drive load applied to motor 5 can be lessened.

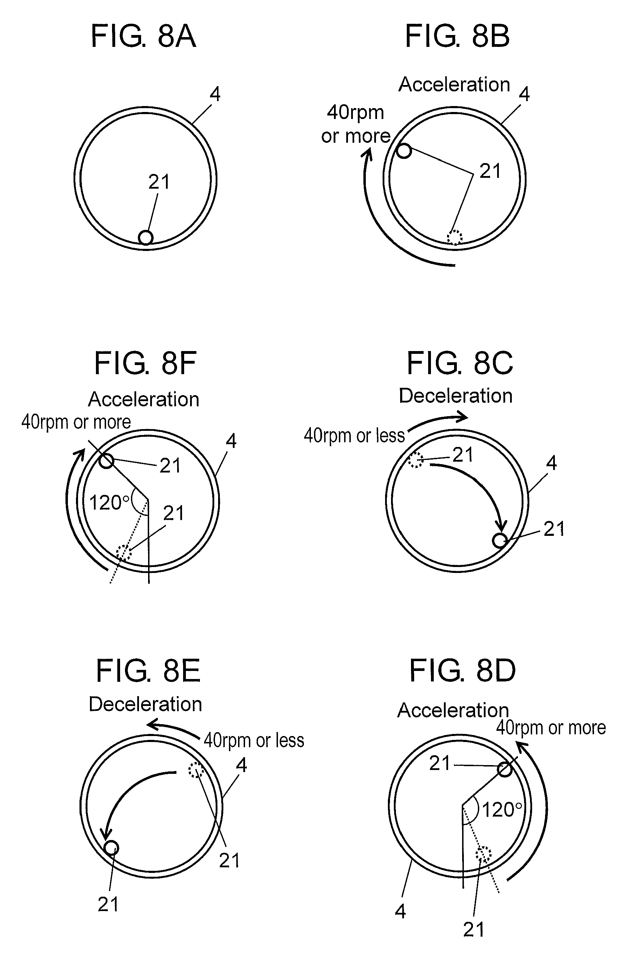

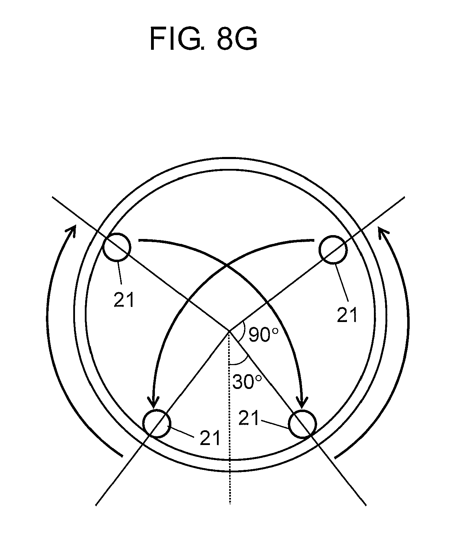

These steps of the normal and reverse continuous rotation drive mode will be explained by referring to the accompanying drawings. FIG. 8A to FIG. 8F are explanatory diagrams of the steps in normal and reverse continuous rotation driving mode of the drum type washing machine in the exemplary embodiment of the present invention, and FIG. 8G is a behavior explanatory diagram of laundries in normal and reverse continuous rotation driving mode of the drum type washing machine.

In the normal and reverse pivot rotation drive mode, by pivot rotation of rotary drum 4 exceeding 90 degrees to less than 180 degrees, the laundries are lifted from the broken line position to the solid line position shown in FIG. 8B, FIG. 8D, FIG. 8F, by exceeding 90 degrees to less than the maximum limit of 180 degrees. By executing this pivot rotation drive normally and reversely alternately in the sequence of FIG. 8B, FIG. 8D, FIG. 8F, FIG. 8D, Fig. 8F, ..., as shown in FIG. 8C, FIG. 8E, at the solid line position of the final point for lifting of laundries 21 or its vicinity, slow-down or braking state may occur for inverting the rotation. By the inertia applied to laundries 21, forced peeling force occurs, and along with own weight, laundries 21 are peeled off and dropped instantly and securely along a parabolic curve as indicated by arrow from the broke line position to the solid line position of the inside of rotary drum 4.

What is more, by normal and reverse alternate pivot rotation drive, the lifting position and dropping position of laundries 21 can be alternately changed over every time in the pivot rotation drive, right and left alternately as shown in FIG. 8G, and the loosening effect of entangling, twisting and creasing of laundries 21 can be enhanced, and the mechanical force can be applied to laundries 21.

As a result, pivot rotation of rotary drum 4 causes to lift laundries 21 up to the upper part of left or right side normally and reversely alternately, and at the final point or vicinity of lifting of laundries 21, deceleration or braking starts. By the forced peeling force by inertia and by gravity, laundries 21 can be securely and instantly peeled off from the inside of rotary drum 4, and dropped to the opposite right and left sides of rotary drum 4, and this operation is repeated. By this repetition, in every pivot rotation, the lifting position and dropping position of laundries 21 are changed over right and left alternately, and the disentangling effect on laundries 21 is enhanced, and entangling, twisting and sticking to inside of rotary drum 4 can be prevented, and laundries 21 can be taken out easily, and creasing of laundries 21 can be substantially lessened.

Moreover, a mechanical force can be applied to laundries 21. That is, since the number of times of dropping of laundries 21 can be increased substantially, and the functions can be utilized effectively at every step of drum type washing machine, such as beat-washing effect and beat-rinsing effect by beating action, and crease straightening effect by beating action.

Therefore, when such normal and reverse pivot rotation drive mode is executed at the drying step, entangling, twisting and creasing of laundries 21 can be loosened, and laundries 21 are spread widely, and the ventilation of individual laundries 21 is enhanced, and dry and hot air can be blown into everywhere, and laundries 21 can be dried evenly and in a short time. At the dewatering step, the laundries 21 may be pressed by force to the inside of rotary drum 4 in entangled, twisted or creased state after the washing step and the rinsing step, and the laundries 21 may be heavily creased after the dewatering step. In such a case, too, when the lifting position and the dropping position of laundries 21 can be alternately exchanged right and left, and the dropping position is exchanged alternately up and down, laundries 21 can be exchanged right and left, loosened effectively, and further loosened smoothly by an action of mechanical force, and further when combined with the normal and reverse continuous rotation drive mode, laundries 21 can be exchanged up and down. Still more, in a dried state, laundries 21 are straightened by beating action in dropping motion, the individual laundries 21 can be undistorted and loosened, and the fibers can be regenerated, so that the finishing state may be substantially improved.

To realize such normal and reverse pivot rotation drive mode of rotary drum 4, the driving load applied to motor 5 is extremely large. However, as mentioned above, by using motor 5 increased in the torque by disposing inner rotor 5c and outer rotor 5d on the inner and outer circumferences of stator 5a, an ideal behavior can be applied to laundries 21 as shown in FIG. 8G. By using motor 5 having such structure, the normal and reverse pivot rotation drive mode having quick inverting action can be executed easily without trouble even if used in severe conditions including quick normal pivot rotation, quick reverse pivot rotation, and sudden braking. Besides, by executing the normal and reverse pivot rotation drive mode and the normal and reverse continuous rotation drive mode lower in driving load alternately, the machine load can be decreased.

### INDUSTRIAL APPLICABILITY

The present invention can be used in a drum type washing machine having a rotary drum installed in a horizontal direction or in an inclined direction.

## Claims

1. A drum type washing machine comprising:
a rotary drum for accommodating a laundry, the rotary drum being formed in a cylindrical shape with a bottom and installed so that a direction of a rotation axis is set in a horizontal direction or inclined downward from the horizontal direction, in terms of a line from an opened front side to a backside at the bottom;
a washing tub incorporating the rotary drum and being supported elastically in a washing machine main body;
a motor for driving the rotary drum mounted on a backside of the washing tub; and
a rotation shaft for transmitting rotation of the motor to the rotary drum,
wherein the motor includes:
a stator mounted on the backside of the washing tub at a plurality of positions by a plurality of mounting devices, which is molded with a resin material integrally with the stator and formed extending outward from an outer circumference , and
a rotor rotatably supported on the backside of the washing tub connected to the rotation shaft,
wherein when the number of teeth extended radially from the stator is 6N (N being a natural number) and the number of mounting devices is M, 2N and M are prime and the number of poles of the motor is 10N.

2. The drum type washing machine according to claim 1,
wherein the rotor includes an outer rotor and an inner rotor disposed at an outside and an inside of the stator.

3. The drum type washing machine according to claim 1 or 2,
wherein a kind of intervals between the mounting devices disposed in a peripheral direction is set to be any number from one to a number of mounting devices.
